# EUROPÄISCHE PATENTSCHRIFT

(11) **EP 1 433 971 B1**
(45) Veröffentlichungstag und Bekanntmachung des Hinweises auf die Patenterteilung: **08.08.2007**
(21) Anmeldenummer: 03029522.4
(22) Anmeldetag: 20.12.2003
(51) Int. Cl.: F16D 23/12, F16D 48/02, F15B 7/00

(54) **Hydraulisches System**
Hydraulic system
Système hydraulique

(30) Priorität: 23.12.2002 DE 10260869
(43) Veröffentlichungstag der Anmeldung: 30.06.2004
(73) Patentinhaber: LuK Lamellen und Kupplungsbau Beteiligungs KG, 77815 Bühl (DE)
(72) Erfinder: Rammhofer, Thomas, 77880 Sasbach (DE); Grabenstätter, Jan, 76593 Gernsbach (DE)

(56) Entgegenhaltungen:
- WO-A-03/095280
- DE-A1- 4 237 853
- DE-A1- 19 857 707
- GB-A- 2 160 284
- US-A1- 2001 025 489

## Beschreibung

Die vorliegende Erfindung betrifft ein hydraulisches System, insbesondere für Kraftfahrzeuge, umfassend einen Geberzylinder mit einem Gehäuse, einem in diesem axial verschiebbar angeordneten Kolben, der einen mit einer Hydraulikflüssigkeit gefüllten Druckraum begrenzt und bei Betätigung des Geberzylinders mittels einer auf den Kolben wirkenden Kolbenstange axial verschoben wird und dadurch die Hydraulikflüssigkeit beaufschlagt und zumindest einem zwischen Gehäuse und Kolben angeordneten Dichtmittel, weiter umfassend einen Nehmerzylinder und eine diese verbindende Druckmediumsleitung.

Ein gattungsgemäßes hydraulisches System ist beispielsweise aus der DE 100 39 242 A1 bekannt. Nachteilig an Systemen nach dem Stand der Technik ist, dass bei Drücken, die oberhalb der zulässigen Betriebsdrücke liegen, eine Beschädigung des hydraulischen Systems auftreten kann. Derartige hohe Drücke können z.B. bei einer stoßartigen Belastung des Geber- oder Nehmerzylinders auftreten.

Die DE 198 57 707 A1 offenart die Verwendung einer Überlastsicherung in einem hydraulischen System zum Schutz der Kupplung.

Der vorliegenden Erfindung liegt daher die Aufgabe zugrunde, ein hydraulisches System anzugeben, das bei einer Überlastung nicht beschädigt wird. Dieses Problem wird durch ein hydraulisches System, insbesondere für Kraftfahrzeuge, umfassend einen Geberzylinder mit einem Gehäuse, einem in diesem axial verschiebbar angeordneten Kolben, der einen mit einer Hydraulikflüssigkeit gefüllten Druckraum begrenzt und bei Betätigung des Geberzylinders mittels einer auf den Kolben wirkenden Kolbenstange axial verschoben wird und dadurch die Hydraulikflüssigkeit mit Druck beaufschlagt und zumindest einem Zwischengehäuse und Kolben angeordneten Dichtmittel, weiter umfassend einen Nehmerzylinder und eine diese verbindende Druckmediumsleitung gelöst, bei dem in dem hydraulischen System ein Überdruckventil angeordnet ist, das den Druck in dem hydraulischen System auf einen Maximaldruck begrenzt, wobei das Überdruckventil eine Primärdichtung umfasst, deren Dichtwirkung durch weitere Mittel oberhalb des Maximaldruckes verringert ist. Das Überdruckventil öffnet bei Erreichen eines bestimmten Druckes, wobei der Druck in dem hydraulischen System abgebaut wird. Der Maximaldruck liegt dabei unterhalb des Berstdruckes sämtlicher Komponenten. Das Überdruckventil kann bei einem konstanten Druck öffnen, es kann sich aber auch um ein einstellbares Ventil, handeln, das bei einem individuell einstellbaren konstanten oder variablen Druck öffnet oder dessen Öffnungsdruck abhängig von anderen Parametern wie z.B. Temperaturen, Druckgradienten oder dgl. ist.

Vorteilhaft ist es, wenn das Überdruckventil in den Geberzylinder integriert ist. Mit Integration ist hier die räumliche Anordnung an oder in dem Geberzylinder gemeint. Dies ermöglicht es, bei Öffnen des Überdruckventils ausströmendes Fluid unmittelbar in den drucklosen Nachlaufbehälter zu überführen.

Erfindungsgemäß ist vorgesehen, dass das Überdruckventil eine Primärdichtung umfasst, deren Dichtwirkung durch weitere Mittel oberhalb eines Maximaldruckes verringert ist. Das Überdruckventil ist somit in die bereits vorhandene Primärdichtung bzw. zu der Dichtung gehörende Einbauelemente integriert. Oberhalb des Maximaldruckes ist die Dichtwirkung der Primärdichtung verringert bzw. aufgehoben, so dass ein abrupter oder allmählicher Druckabbau aus dem Druckraum in einen Nachlaufraum möglich ist. Das Überdruckventil kann dabei als eigenständiges Ventil in die Primärdichtung bzw. in Anbauteile der Primärdichtung integriert sein, ebenso kann die Primärdichtung selbst z.B. durch eine geeignete Ausgestaltung von Dichtlippen oder dgl. als Überdruckventil ausgelegt sein. Die Primärdichtung dichtet daher bis zum Erreichen des Maximaldruckes ab und öffnet oberhalb des Maximaldruckes. Vorteilhaft umfassen die weiteren Mittel eine weitere Dichtung, die die Funktionalität des Überdruckventils realisiert. Die Dichtung ist dabei so ausgelegt, dass diese nur bis zu einem Maximaldruck dicht ist. In einer bevorzugten Ausführungsform ist die weitere Dichtung ein Runddichtring, beispielsweise ein sog. O-Ring. Die weiteren Mittel können einen Dichtungsträger umfassen. Der Dichtungsträger ist zumindest teilweise zwischen Primärdichtung und Gehäuse angeordnet, wobei die weitere Dichtung zwischen Gehäuse und Dichtungsträger angeordnet sein kann. Der Dichtungsträger verbindet daher die Primärdichtung sowie die weitere Dichtung zu einer gemeinsamen und zusammen montierbaren funktionellen Baugruppe.

Der Dichtungsträger umfasst in einer bevorzugten Ausführungsform eine Dichtnase, wobei die weitere Dichtung zwischen Gehäuse und Dichtnase angeordnet ist. Die Dichtnase erstreckt sich vorteilhaft von einem für die Primärdichtung vorgesehenen Sitz in Richtung des Nachlaufraumes, so dass ein möglichst geringer radialer Bauraum erreicht werden kann.

In einer Ausgestaltung der Erfindung ist der Dichtungsträger aus einem Kunststoff gefertigt, dessen Elastizitätsmodul stärker temperaturabhängig ist als der Elastizitätsmodul des Gehäuses. Mit zunehmender Temperatur wird der Dichtungsträger damit stärker verformbar als das Gehäuse. Entsprechend lässt die Dichtungswirkung der zwischen Gehäuse und Dichtnase des Dichtungsträgers angeordneten weiteren Dichtung bei steigender Temperatur nach. Bei höheren Temperaturen öffnet das Überdruckventil daher bereits bei geringerem Drücken als bei geringeren Temperaturen.

Alternativ kann das Überdruckventil auch in einer Anordnung umfassend eine Leitungskupplung mit einer Leitungsbuchse integriert sein. Die Leitungskupplung und die Leitungsbuchse können beispielsweise Verbindungen zwischen dem Geberzylinder und einer Hydraulikleitung oder dem Nehmerzylinder und einer Hydraulikleitung sein. Das Überdruckventil kann dabei sowohl in die Leitungskupplung als auch in die Leitungsbuchse integriert sein oder durch beide zusammen gebildet werden. In einer bevorzugten Ausführungsform ist vorgesehen, dass das Überdruckventil durch eine Dichtung gebildet wird, deren Geometrie und Werkstoff so ausgelegt sind, dass diese nur bis zu einem Maximaldruck dicht ist. Die Dichtung ist dabei vorteilhaft eine üblicherweise zur Abdichtung der Verbindung zwischen Leitungskupplung und Kupplungsbuchse gegenüber der Umgebung vorhandenen Dichtung, üblicherweise ist dies eine Ringdichtung in Form eines O-Ringes.

Im Folgenden werden Ausführungsbeispiele der Erfindung anhand der beiliegenden Zeichnungen erläutert. Dabei zeigen:
- Fig. 1: eine schematische Darstellung eines hydraulischen Systems anhand eines Ausführungsbeispiels einer Kupplungsausrückvorrichtung;
- Fig. 2: eine Prinzipskizze eines Geberzylinders im Teilschnitt;
- Fig. 3: einen Teilschnitt durch eine hydraulische Kupplung;
- Fig. 4: einen Geberzylinder mit hydraulischer Selbsthemmung im Schnitt.
- Fig. 5: eine Prinzipskizze eines Geberzylinders mit hydraulischer Selbsthemmung;
- Fig. 6: einen Teilschnitt durch einen Geberzylinder bei drucklosem Nachlaufraum;
- Fig. 7: einen Teilschnitt durch einen Geberzylinder bei druckbeaufschlagtem Nachlaufraum.

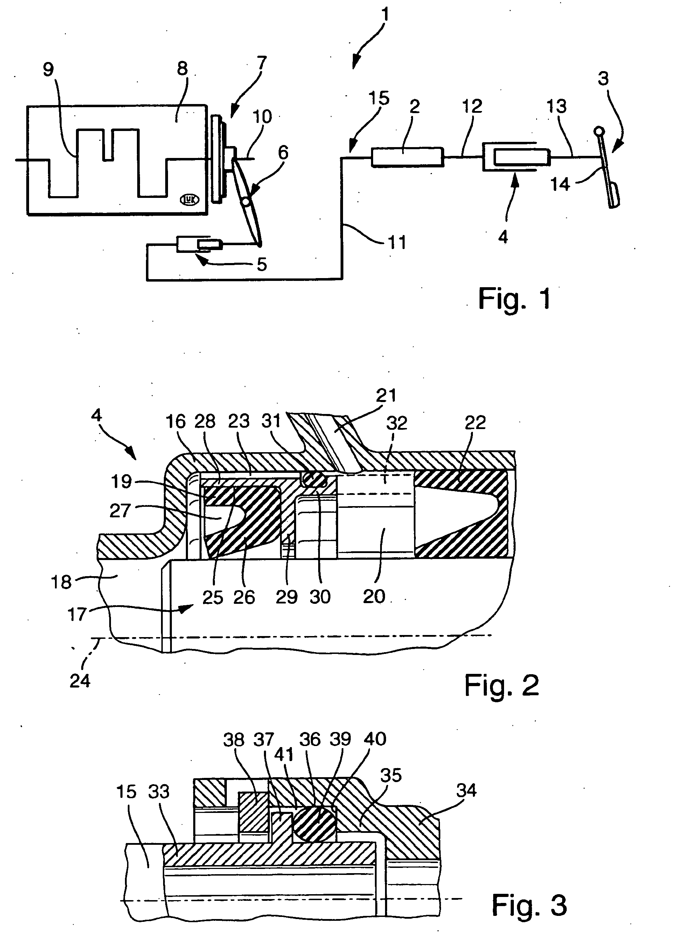

Fig. 1 zeigt in schematischer Darstellung eine mögliche Ausgestaltung eines hydraulischen Systems anhand einer Kupplungsausrückvorrichtung 3 mit einem Geberzylinder 4 und einem Nehmerzylinder 5. Eine Steckverbindung 2 ist in dem gezeigten Ausführungsbeispiel in eine diese verbindende Druckmediumsleitung 15 eingebaut und trennt diese in einen ersten Leitungsstrang 11 und einen zweiten Leitungsstrang 12 voneinander. Es versteht sich, dass in anderen Ausführungsbeispielen die Steckverbindung 2 an dem Geberzylinder 4 oder dem Nehmerzylinder 5 angeordnet sein kann. Weiterhin kann in die Steckverbindung gleichzeitig die Funktion eines Schwingungsfilters, beispielsweise als so genanntes "Kribbelfilter", integriert sein.

Das Kupplungsausrücksystem 3 betätigt die Kupplung 7 hydraulisch durch Beaufschlagung des Geberzylinders 4 mittels eines Betätigungsgliedes 14, das ein Fußpedal, ein Aktor, beispielsweise ein elektrischer Aktor, oder dergleichen sein kann.

Hierdurch wird mittels einer mechanischen Übertragung 13 Druck im Geberzylinder 4 aufgebaut, der über die Druckmediumsleitung 15 bzw. den zweiten Leitungsstrang 12 die Steckverbindung 2 und den ersten Leitungsstrang 11 einen Druck im Nehmerzylinder 5 aufbaut. Der Nehmerzylinder 5 kann - wie in dem gezeigten Beispiel - konzentrisch um die Getriebeeingangswelle 10 angeordnet sein und sich axial an einem - nicht dargestellten Getriebegehäuse abstützen und die nötige Ausrückkraft über ein Ausrücklager an der Kupplung 7, beziehungsweise an deren Ausrückelementen wie Tellerfeder, aufbringen. Weitere Ausführungsbeispiele können einen Nehmerzylinder 5, der über eine Ausrückmechanik einen Ausrücker betätigt und außerhalb der Kupplungsglocke angeordnet ist, vorsehen, wobei dieser mittels eines in hydraulischer Verbindung mit dem Geberzylinder stehenden im Nehmerzylindergehäuse untergebrachten Kolbens die Ausrückmechanik axial beaufschlagt. Zum Aufbringen der Ausrückkraft ist der Nehmerzylinder jeweils gehäusefest am Getriebegehäuse, das hier nicht näher dargestellt ist, oder an einem anderen gehäusefesten Bauteil angebracht. Die Getriebeeingangswelle 10 überträgt bei geschlossener Kupplung 7 das Drehmoment der Brennkraftmaschine 8 auf ein nicht näher dargestelltes Getriebe und anschließend auf die Antriebsräder eines Kraftfahrzeuges.

Durch die Verbrennungsprozesse in der Brennkraftmaschine 8 erfährt die Kurbelwelle 9 in Abhängigkeit von der Ausgestaltung der Brennkraftmaschine 8, beispielsweise in Abhängigkeit von der Zylinderzahl, ungleichförmige Belastungen, die sich in Axial- und/oder Taumelschwingungen dieser äußern und die über die Ausrückmechanik 6 auf den Nehmerzylinder 5, die Druckmediumsleitung 15 auf den Geberzylinder 4 und von dort über die mechanische Übertragung 13 auf das Betätigungsglied 14 übertragen werden. Im Falle eines' Kupplungspedals als Betätigungsglied werden diese Schwingungen als unangenehm empfunden. Im Falle eines Aktors als Betätigungsglied 14 kann beispielsweise eine verminderte Regelgenauigkeit oder eine verkürzte Lebensdauer die Folge der Schwingungen sein. Ein beispielsweise in die Steckverbindung 2 integriertes Kribbelfilter ist daher zur Dämpfung in die Druckmediumsleitung 15 eingeschaltet und zur Dämpfung der von der Kurbelwelle 9 eingetragenen Vibrationen abgestimmt. Der Frequenzbereich derartiger Schwingungen liegt typischer Weise bei 50 bis 200 Hz.

Fig. 2 zeigt einen Teilschnitt durch einen Geberzylinder 4 eines hydraulischen Systems 1. Der Geberzylinder umfasst im Wesentlichen ein Gehäuse 16, in dem ein Kolben 17 angeordnet ist. Das Gehäuse 16 und der Kolben 17 begrenzen einen in der Fig. 2 nur teilweise dargestellten Druckraum 18, in dem ein Fluid, vorzugsweise eine Hydraulikflüssigkeit, komprimiert und über die hier nicht dargestellte Druckmediumsleitung 15 weitergeleitet werden kann. Der Kolben 17 ist andererseits mit einer ebenfalls in der Fig. 2 nicht dargestellten Pleuelstange als mechanischer Übertragung 13 zur Betätigung beispielsweise mit einem Fußpedal als Betätigungsglied 14 verbunden. Der Druckraum 18 ist mittels einer Primärdichtung 19 gegenüber einem Nachlaufraum 20 abgedichtet. Schnüffelnute 116 verbinden den Druckraum 18 in entlasteten der Endstellung des Kolbens 17 mit dem Nachlaufraum 20. Der Nachlaufraum 20 ist über eine Nachlaufleitung 21 mit einem nicht dargestellten Nachlaufbehälter verbunden. Der Nachlaufbehälter ist ein offener Behälter, der gegenüber der Umgebung also nicht druckdicht abgedichtet ist. Abgesehen von der gegenüber dem Nachlaufraum 20 leicht erhöhten Einbaulage des Nachlaufbehälters, die ein sicheres Nachfließen der Hydraulikflüssigkeit gewährleisten soll, herrscht daher im Nachlaufraum 20 in etwa der Umgebungsdruck. Der Nachlaufraum 20 wiederum ist mit einer Sekundärdichtung 22 gegenüber der Umgebung abgedichtet. Die Sekundärdichtung ist in Fig. 2 nur schematisch angedeutet. Die Primärdichtung 19 ist mittels eines Dichtungsträgers 23 in dem Gehäuse 16 angeordnet. Das Gehäuse 16, der Kolben 17 sowie die Primärdichtung 19 sind im Wesentlichen rotationssymmetrisch, entsprechend ist auch der Dichtungsträger 23 rotationssymmetrisch bezüglich einer Rotationsachse 24. Die Primärdichtung 19 besteht in an sich bekannter Weise aus einem im Querschnitt im Wesentlichen L-förmigen Grundkörper 25 sowie einer daran schräg radial in Richtung der Rotationsachse 24 verlaufenden Dichtlippe 26. Zwischen Grundkörper 25 und Dichtlippe 26 verbleibt somit ein Spalt 27. Durch den Spalt 27 wird bei einem in dem Druckraum 18 gegenüber dem Nachlaufraum 20 erhöhten Druck die Dichtlippe 26 radial nach innen gegen den Kolben 17 gedrückt und gewährleistet so die Dichtheit der Anordnung. Der Dichtungsträger 23 umfasst im Wesentlichen einen axial sich erstreckenden Axialring 28, an dem ein Radialring 29 angeordnet ist. An der dem Nachlaufraum 20 zugewandten Seite verfügt der Dichtungsträger 23 über eine Dichtnase 30, in der ein Runddichtring (O-Ring) 31 angeordnet ist. Der Runddichtring 31 ist so angeordnet, dass dieser zum Einen die Dichtnase 30, zum Anderen das Gehäuse 16 berührt.

Bei einem Überdruck in dem Druckraum 18 gegenüber dem Nachlaufraum 20 wird der Dichtungsträger 23 partiell oder gleichmäßig elastisch verformt, so dass der dichte Sitz der Runddichtung 31 nicht mehr gewährleistet ist. Die Runddichtung 31 kann ihre Dichtfunktion nicht mehr erfüllen, Flüssigkeit tritt aus dem Druckraum 18 in den Nachlaufraum 20 aus und der Druck im Druckraum 18 baut sich ab. Wesentlich für die Funktion der Runddichtung 31 in Zusammenwirken mit dem Dichtungsträger 23 als Überdruckventil 42 ist ein gutes elastisches Verformungsverhalten des Dichtungsträgers 23 sowie ein entsprechend steifes Gehäuse 16 als Gegenstück. Das Verformungsverhalten insbesondere des Dichtungsträgers 23 soll eine relativ starke Temperaturabhängigkeit aufweisen und damit soll eine möglichst gute Übereinstimmung des Druckes, bei dem das Überdruckventil 42 öffnet, mit dem temperaturabhängigen Berstdruck im Geberzylinder vorliegen. Der Berstdruck eines gängigen Geberzylinders beträgt beispielsweise etwa 140 bar bei -40 °C und etwa 70 bar bei 120 °C. Der Druck, bei dem das Überdruckventil 42 öffnet, liegt jeweils unterhalb dieser Drücke. Durch eine entsprechend angepasste Nachgiebigkeit des Dichtungsträgers 23 sowie einer entsprechenden Vorspannung der Runddichtung 31 kann das Dichtverhalten der Runddichtung 31 über die Temperatur angepasst werden. Eine Anpassung der Dichtwirkung kann auch z.B. durch eine Veränderung der Geometrie der Runddichtung 31, z.B. einen runden oder ovalen Querschnitt oder Veränderung des Durchmessers der Runddichtung, oder eine Veränderung der Maße der in die Nase 30 eingebrachten Nut erreicht werden. Die Temperaturabhängigkeit kann beispielsweise erreicht werden, indem das Elastizitätsmodul des Dichtungsträgers 23 stärker von der Temperatur abhängig ist als das Elastizitätsmodul des Gehäuses 16. Mit zunehmender Temperatur wird also der Dichtungsträger 23 relativ gesehen weicher gegenüber dem Gehäuse 16.

Zwischen dem Dichtungsträger 23 und der Sekundärdichtung 22 kann ein umlaufender Abstandshalter 32 angeordnet sein, der ein axiales Verrutschen des Dichtungsträgers 23 und damit unter Anderem auch der Primärdichtung 26 verhindert.

Der Dichtungsträger 23, der Axialring 28, die Dichtnase 30 sowie die Runddichtung 31 sind Teil eines Überdruckventils 42, das die Dichtwirkung der Primärdichtung 26 oberhalb eines Maximaldruckes beeinträchtigt oder gar aufhebt, so dass ein Druckausgleich zwischen dem Druckraum 18 und dem Nachlaufraum 20 möglich ist. Der Maximaldruck, bei dem das so gebildete Überdruckventil öffnet, ist zudem temperaturabhängig.

Fig. 3 zeigt eine alternative Ausgestaltung eines Überdruckventils 42. Hier ist das Überdruckventil 42 integriert in dem Anschlussstück der Druckmediumsleitung 15 an dem Geberzylinder 4. Alternativ kann das Überdruckventil auch im Konnektor zwischen Druckmediumsleitung 15 und Nehmerzylinder 5 angeordnet sein. Dargestellt in Fig. 3 ist eine Leitungskupplung 33, die mit der Druckmediumsleitung 15 verbunden ist. Die Leitungskupplung 33 ist in Einbaulage gekuppelt mit einer Kupplungsbuchse 34, die beispielsweise an dem Geberzylinder 4 oder dem Nehmerzylinder 5 angeordnet ist. Die Kupplungsbuchse 34 ist im Wesentlichen rotationssymmetrisch aufgebaut mit einer ersten Stufe 35, deren Innendurchmesser in etwa dem Außendurchmesser des vorderen Teils der Leitungskupplung 33 entspricht, und einer zweiten Stufe 36, deren Innendurchmesser geringfügig größer ist als der Außendurchmesser eines umlaufenden Ringes 37 der Leitungskupplung 33. Der umlaufende Ring 37 wird in Einbaulage hintergriffen durch eine Klemmfeder 38. Im Bereich der zweiten Stufe 36 ist zwischen Leitungskupplung 33 und Kupplungsbuchse 34 eine Ringdichtung (O-Ring) 39 angeordnet. Diese wird durch eine zwischen erster Stufe 35 und zweiter Stufe 36 angeordnete im Wesentlichen radial verlaufende Anlagefläche 40 und den umlaufenden Ring 37 in axialer Richtung festgelegt. Durch Wahl des Innendurchmessers der zweiten Stufe 36 gegenüber dem Innendurchmesser der ersten Stufe 35 und damit auch dem Außendurchmesser der Leitungskupplung 33 sowie durch Wahl des Abstandsmaßes des umlaufenden Ringes 37 gegenüber der Anlagefläche 40 kann die Querschnittsfläche des Dichtungsraumes 41 variiert werden. Die Ringdichtung 39 hat üblicherweise einen runden oder ovalen Querschnitt und wird in den Dichtungsraum 41 eingepresst und dabei hin zu dem kastenförmigen Querschnitt des Dichtungsraums 41 hin verformt. Durch diese Verformung wird die Ringdichtung 39 mit einer gewissen Flächenpressung auf die jeweiligen Anlageflächen aufgedrückt. Der Grad der Verformung bestimmt daher zu einem großen Teil die Dichtwirkung dieser Dichtungsanordnung. Bei einer geringen Flächenpressung zwischen der Ringdichtung 39 und der Leitungskupplung 33 bzw. der Kupplungsbuchse 34 wird eine entsprechend geringe Dichtwirkung erzielt, d.h. die Dichtung wird bereits bei einem relativ geringen Druck undicht, entsprechend kann durch eine hohe Flächenpressung eine größere Dichtwirkung erzielt werden.

Die Dichtwirkung der Ringdichtung 39 bzw. die geometrische Auslegung von Ringdichtung 39 und dem Dichtungsraum 41, mithin der Innendurchmesser des Dichtungsraums 41 - dieser entspricht dem Außendurchmesser der, Leitungskupplung 33 in dem Bereich, in dem die Ringdichtung 39 angeordnet ist- der Außendurchmesser des Dichtungsraums 41 - dieser entspricht dem Innendurchmesser der zweiten Stufe 36-sowie die axiale Tiefe des Dichtungsraums 41 beeinflussen den Druck; bei dem die Dichtungsanordnung undicht wird. Die Dichtungsanordnung bildet hier also ebenfalls ein Überdruckventil 42, das bei einem bestimmten Druck öffnet. Da die Werkstoffparameter, insbesondere die Elastizität der Ringdichtung 39, temperaturabhängig sind, ist auch der Maximaldruck, bei dem das so gebildete Überdruckventil 42 öffnet, temperaturabhängig.

Statt einer Ringdichtung 39 können auch mehrere Ringdichtungen 39 z.B. axial hintereinander angeordnet sein. Ebenso kann statt einer Ringdichtung 39 eine beliebige andere Dichtungsform verwendet werden, beispielsweise . Flachdichtungen, Profildichtungen, Dichtringe oder dgl.

Durch das in, den Ausführungsbeispielen der Fig. 2 und Fig. 3 jeweils durch einen O-Ring gebildete Überdruckventil 42 wird erreicht, dass der Druck in dem hydraulischen System beispielsweise bei einer stoßartigen Belastung nicht die Berstgrenze des Geber- oder Nehmerzylinders 4, 5 bzw. der Druckleitung 15 erreichen kann, sondern zuvor durch das Überdruckventil 42 abgebaut wird. Hierbei ist in dem Ausführungsbeispiel der Fig. 2 ein Druckabbau in den Nachlaufraum 20 des Geberzylinders 4 möglich, so dass keine Hydraulikflüssigkeit aus dem Gesamtsystem austritt. Bei dem Ausführungsbeispiel der Fig. 3, bei dem das Überdruckventil 42 in eine Kupplung integriert ist, tritt demgegenüber Hydraulikflüssigkeit in die Umgebung aus. Dafür hat das Ausführungsbeispiel gemäß Fig. 3 gegenüber dem der Fig. 2 den Vorteil, dass hier zunächst keinerlei Änderung an dem System Stecker-Kupplung vorzunehmen ist. Die Ventilwirkung der verwendeten Dichtung wird lediglich durch eine entsprechende Anpassung der geometrischen Parameter bzw. der Werkstoffkennwerte insbesondere bei dem verwendeten Dichtmittel, in diesem Ausführungsbeispiel ist dies die Ringdichtung bzw. der O-Ring 39, erreicht.

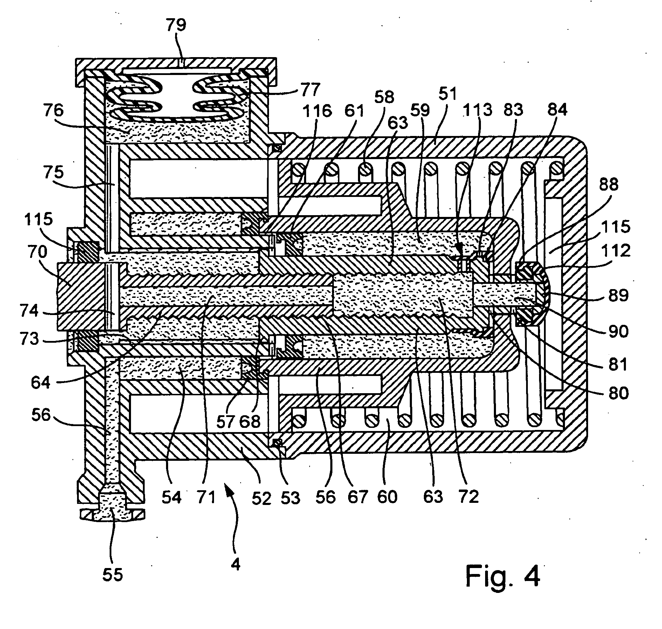

Fig. 4 zeigt einen Geberzylinder 4 mit hydraulischer Selbsthemmung im Schnitt. Dieser umfasst ein Gehäuse 50 mit einem ersten Gehäuseteil 51 sowie einem zweiten Gehäuseteil 52, die beispielsweise miteinander verschraubt sein können und mittels einer Gehäusedichtung 53, die beispielsweise eine O-Ring Dichtung ist, gegenüber der Umgebung abgedichtet sind. Innerhalb des Gehäuses ist ein primärer Druckraum 54 angeordnet, der über einen Hydraulikanschluss 55 mit der Druckleitung 15 entsprechend Fig. 1. gekoppelt ist. Der primäre Druckraum 54 wird zum einen begrenzt durch Teile des Gehäuses 52, zum anderen durch einen Kolben 56 mit einer Primärdichtung 57. Der primäre Druckraum 54, der Kolben 56 sowie Primärdichtung 57 sind jeweils ringförmig ausgebildet, in der Darstellung der Fig. 4 also rotationssymmetrische Teile. Der Kolben 56 ist Teil einer in etwa becherförmig ausgebildeten Kolbenglocke 62. Eine Kompensationsfeder 58 stützt sich an dem ersten Gehäuseteil 51 sowie an der Kolbenglocke 62 ab und beaufschlagt diese in Druckrichtung des primären Druckraums 54 mit einer Kraft. Der primäre Druckraum 54 dient der eigentlichen hydraulischen Kraftübertragung auf einen Nehmerzylinder 5. Neben dem primären Druckraum 54 ist ein erster Sperrraum 59 sowie ein zweiter Sperrraum 60 vorhanden. Der erste Sperrraum 59 wird in erster Linie gebildet durch den glockenartigen Kolben 56 sowie eine gehäusefest an dem zweiten Gehäuseteil 52 festgelegten Sekundärdichtung 61. Der erste Sperrraum 59 liegt also gewissermaßen auf der Innenseite der Kolbenglocke 62.

Die Außenseite der Kolbenglocke 62 bildet zusammen mit dem Gehäuse 50 den zweiten Sperrraum 60. Die Kolbenglocke 62 ist verbunden mit einem Stößel 63, der mit einem Stift 64 in einer Bohrung 65 der Kolbenglocke 62 gelagert ist. Der durch die Bohrung 65 hindurchragende Teil des Stiftes 64 ist mit einem Sicherungsring 66 versehen. Die Länge des Stiftes 64 sowie des Sicherungsringes 66 ist so bemessen, dass der Stift 64 mit einem axialen Spiel in der Bohrung 65 gelagert ist. Den Stößel 63 umfasst ein Innengewinde 67 sowie eine Verdrehsicherung 68, die beispielsweise als Vorsprung, der in einer Nut des zweiten Gehäuseteils 52 beweglich gelagert ist, ausgeführt sein kann. Das Innengewinde 67 steht in Eingriff mit einem korrespondierenden Außengewinde 69 einer Spindel 70. Die Spindel 70 ist mit einem hier nicht dargestellten Lager in axialer Richtung fest in dem Gehäuse 50 gelagert und mittels einer Dichtung 115 gegenüber der Umgebung abgedichtet. Durch Rotation der Spindel 70 kann somit der Stößel 63, ohne selbst in Rotation versetzt zu werden, in axialer Richtung verschoben werden. Die Spindel 70 bildet in Verbindung mit dem Stößel 63 ein Antriebsmittel 117 für die Kolbenglocke 62 und damit für den Kolben 56. Statt eines rotierenden Antriebes kann hier unter Verzicht auf eine Spindel auch direkt ein Linearantrieb verwendet werden. Der Stift 64 verfügt über eine erste Längsbohrung 71, die sich bis auf den Gewindegrund des Innengewindes 67 erstreckt. Entsprechend verfügt die Spindel über eine zweite Längsbohrung 72. Die Spindel 70 ist umgeben von einem Hohlraum 73, wobei eine oder mehrere Querbohrungen 74 die zweite Längsbohrung 72 und damit auch die erste Längsbohrung mit dem Hohlraum 73 verbinden. Der Hohlraum 73 wiederum ist mittels einer Leitung 75 mit einem Ausgleichsbehälter 76 verbunden. Dieser ist über eine flexible Membran 77 gegenüber der Umgebung abgedichtet, in dem Ausgleichsbehälter 76 herrsch daher im Wesentlich der Umgebungsdruck. Die Membran 77 wiederum ist mit einem Deckel 78 mit einer Bohrung 79 gegenüber der Umgebung geschützt. In den Stift 64 sind eine erste Radialbohrung 80 sowie eine zweite Radialbohrung 81 eingebracht, die durchgehend sein können, aber zumindest von einer Seite die erste Längsbohrung 71 erreichen. Die erste und zweite Radialbohrung 81, 82 sind so angeordnet, dass in den spielbehafteten Endstellungen des Stößel 63 jeweils eine der beiden Radialbohrungen 81, 82 aus der Bohrung 65 herausragt. Auf diese Weise kann also durch die erste Radialbohrung 80 der erste Sperrraum 59 über die erste und zweite Längsbohrung 71, 72, Querbohrung 74, Hohlraum 73, Leitung 75 mit dem Ausgleichsbehälter 76 verbunden werden. Entsprechend kann in der anderen Endstellung des Stößels 63 der zweite Sperrraum 60 mit dem Ausgleichsbehälter 76 verbunden werden. In den Stößel 63 ist zusätzlich mindestens eine dritte Radialbohrung 83, in Fig. 4 ist diese als Bohrungspaar dargestellt, eingebracht. Die dritte Radialbohrung 83 ist von einer zweiten Schlauchmanschette 84 umgeben. Diese ist mit einer Nut 85 an einem Steg 86 in axialer Richtung festgelegt. Die zweite Schlauchmanschette 84 überragt die Stirnfläche 87 des Stößels 63 in axialer Richtung in Richtung der Kolbenglocke 62 und bildet so einen umlaufenen ersten axialen Vorsprung 118. Wird der Stößel 63 auf die Kolbenglocke 62 aufgedrückt, so erfolgt eine Abdichtung der beiden gegeneinander, indem der axiale Vorsprung 118 auf die Kolbenglocke 62 gedrückt wird, so dass die erste Radialbohrung 80 nicht mit dem ersten Sperrraum 59 verbunden ist. Bei einem Überdruck in der ersten bzw. zweiten Längsbohrung 71, 72 gegenüber dem ersten Sperrraum 59 wirkt die zweite Schlauchmanschette 84 als Schlauchdichtung in Verbindung mit der dritten Radialbohrung 83, im Bereich der Bohrung 83 hebt sich also die zweite Schlauchmanschette 84 von der dritten Radialbohrung ab und ermöglicht so einen Übertritt eines Fluids in den ersten Sperrraum 59.

Der Sicherungsring 66 ist von einer ersten Schlauchmanschette 88 umgeben. Auch diese ragt in axialer Richtung über den Sicherungsring 66 in Richtung der Kolbenglocke 62. Wird der Stößel 63 von der Kolbenglocke 62 weggezogen, so wird die erste Schlauchmanschette 88 an die Kolbenglocke 62 gedrückt und dichtet so die zweite Radialbohrung 81 gegenüber dem zweiten Sperrraum 60 ab. In der Fig. 4 dargestellte Stellung des Stößels 63 ist gegenüber der Kolbenglocke 62 die zweite Radialbohrung 81 freigegeben, so dass der zweite Sperrraum 60 mit dem Ausgleichsbehälter 76 verbunden ist. In die Stirnfläche des Stiftes 64 ist eine oder mehrere Axialbohrungen 89 eingebracht, die bis zu der zweiten Längsbohrung 72 reichen. Die Axialbohrungen 89 sind von der Schlauchmanschette 88 abgedeckt. In der Schlauchmanschette 88 ist eine Bohrung 90 angeordnet. Bei einem Überdruck in der zweiten Längsbohrung 72 gegenüber dem zweiten Sperrraum 60 wird die Schlauchmanschette 88 von den Axialbohrungen 89 abgehoben und ermöglicht ein Ausströmen von Fluid durch die Axialbohrungen 89 und die Bohrung 90 in den zweiten Sperrraum 60. Die erste Schlauchmanschette 88 bildet zusammen mit der Kolbenglocke 62 sowie der zweiten Radialbohrung 81 ein erstes Ventil 110, entsprechend bildet die zweite Schlauchmanschette 84 zusammen mit der Kolbenglocke und der ersten Radialbohrung 80 ein zweites Ventil 111. Die Axialbohrung 89 bildet in Verbindung mit der ersten Schlauchmanschette 88 ein erstes Unterdruckventil 112, entsprechend bildet die dritte Radialbohrung 83 zusammen mit der zweiten Schlauchmanschette 84 ein zweites Unterdruckventil 113. Es versteht sich, dass die Ventile auch in anderer Art und Weise ausgeführt sein können, beispielsweise können das erste und zweite Unterdruckventil 112, 113 ebenso durch ein Ventil bestehend aus einer Kugel und einer Feder oder dergleichen realisiert werden. Das erste Ventil 110 und das zweite Ventil 111 bilden dabei ein Zwei-Wege-Ventil, der Ausgleichsbehälter 76 lässt sich entweder mit dem ersten Sperrraum 59 oder mit dem zweiten Sperrraum 60 verbinden.

Nachfolgend wird die Funktionsweise des Geberzylinders erläutert. Hierbei sind verschiedene Lastfälle unterscheidbar:

### 1. Die Kolbenglocke 62 steht in einem Bereich, in dem die Federkraft der Kompensationsfeder 58 größer ist als die Druckkraft im primären Druckraum 54

In Fig. 4 steht der Geberzylinder in diesem Bereich. Die zweite Schlauchmanschette 84 wird gegen die Kolbenglocke 62 gedrückt, wodurch die Verbindung zwischen dem ersten Sperrraum 59 und dem Ausgleichsbehälter 76 unterbrochen ist. Da aus dem ersten Sperrraum 59 kein Fluid entweichen kann, steigt, sobald die Kompensationsfeder 58 die Kolbenglocke 62 um ein kleines Stück vordrückt, die Druckkraft im ersten Sperrraum 59 soweit an, bis sie der Differenz aus der Federkraft aus der Kompensationsfeder 58 und der Druckkraft im primären Druckraum 54 entspricht. Der Stößel 63 ist somit kraftlos. Der Durchmesser, auf dem die zweite Schlauchmanschette 84 auf der Kolbenglocke 62 abdichtet, ist etwas größer als der Durchmesser, mit dem die Sekundärdichtung 61 auf dem Stößel 63 abdichtet. Dies führt dazu, dass mit steigendem Druck in dem ersten Sperrraum 59 auch die Kraft, mit der der Stößel 63 und die Kolbenglocke 62 aneinandergedrückt werden, ansteigt. Dadurch wird die zweite Schlauchmanschette 84 selbstverstärkend zugedrückt. Die erste Schlauchmanschette 88 ist von der Kolbenglocke 62 abgehoben, somit ist der zweite Sperrraum 60 mit dem Nachlaufraum 76 verbunden. Durch die Abdichtung des ersten Sperrraums 59 gegenüber dem Nachlaufraum 76 wird erreicht, dass die Kolbenglocke 62 in der jeweiligen Stellung verharrt. Unabhängig von einer in die Spindel 70 auf den Stößel 63 ausgeübten Druckkraft verbleibt die Kolbenglocke 62 und damit der Kolben 56 in der jeweiligen Stellung. Das System ist also selbsthemmend.

### 2. Vorhub des Kolbens 56 in dem Bereich, in dem die Federkraft der Kompensationsfeder 58 größer ist als die Druckkraft im primären Druckraum 54

Die Kolbenglocke 62 bewegt sich aufgrund des im ersten Sperrraum 59 wirkenden Druckes kurzzeitig langsamer als der Stößel 63. Hierdurch kann der Stößel 63 die zweite Schlauchmanschette 84 von der Kolbenglocke 62 wegziehen, wodurch so viel Fluid aus dem Sperrraum 59 in den Nachlaufraum 76 abfließt, dass die Kolbenglocke 62 dem Stößel 63 nachfolgen kann. Insgesamt bleibt dabei der Druck im ersten Sperrraum 59 erhalten. Die erste Schlauchmanschette 88 ist von der Kolbenglocke 62 abgehoben, somit ist der zweite Sperrraum 60 mit dem Nachlaufraum 76 verbunden und kann bei der Bewegung Fluid nachziehen.

### 3. Vorhub des Kolbens 56 in dem Bereich, in dem der Federkraft der Kompensationsfeder 58 kleiner der Druckkraft im primären Druckraum 54 ist.

Die zweite Schlauchmanschette 84 ist von der Kolbenglocke 62 abgehoben, wodurch das im ersten Sperrraum 59 verdrängte Fluid in den Nachlaufraum 76 fließen kann. Die erste Schlauchmanschette 88 wird vom Stößel 63 bzw. dem Stift 64 und dem Sicherungsring 66 gegen die Kolbenglocke 62 gedrückt. Die Verbindung zwischen dem zweiten Sperrraum 60 und dem Nachlaufraum 76 ist somit unterbunden, wodurch bei der Vorwärtsbewegung ein Unterdruck erzeugt wird. Die erste Schlauchmanschette 88 ist auch als Rückschlagventil ausgeführt, d.h. ab einem bestimmten Unterdruck, der möglichst klein sein sollte, wird das schlauchförmige Ende von der Axialbohrung 89 abgehoben, so dass Fluid durch die Bohrung 90 in den zweiten Sperrraum aus dem Nachlaufraum 76 nachströmen kann.

### 4. Kolben 56 steht in einem Bereich, in dem die Federkraft der Kompensationsfeder 58 kleiner der Druckkraft im primären Druckraum 54 ist.

Die erste Schlauchmanschette 88 wird gegen die Kolbenglocke 62 gedrückt, wodurch die Verbindung zwischen zweiten Sperrraum 60 und Ausgleichsbehälter 76 unterbrochen ist. Da aus dem zweiten Sperrraum 60 kein Fluid entweichen kann, steigt, sobald die Druckkraft im primären Druckraum 54 den Kolben 56 und damit die Kolbenglocke 62 um ein kleines Stück zurückdrückt, die Druckkraft im ersten Sperrraum 59 soweit an, bis sie der Differenz aus der Druckkraft im primären Druckraum 54 und der Federkraft der Kompensationsfeder 58 entspricht. Der Stößel 63 ist somit kraftlos. Der Druck in dem zweiten Sperrraum 60 drückt die erste Schlauchmanschette 88 mit ihrer Dichtfläche auf die Kolbenglocke 62 und drückt den Stößel 63 mit der Kolbenglocke 62 zusammen. Dadurch wird die erste Schlauchmanschette 88 selbstverstärkend zugedrückt. Die zweite Schlauchmanschette 84 ist von der Kolbenglocke 62 abgehoben, somit ist der erste Sperrraum 59 mit dem Ausgleichsbehälter 76 verbunden.

### 5. Rückhub des Kolbens 56 in einem Bereich Federkraft der Kompensationsfeder 58 kleiner der Druckkraft im primären Druckraum 54.

Die Kolbenglocke 62 bewegt sich aufgrund des im zweiten Sperrraum 60 wirkenden Druckes kurzzeitig langsamer als der Stößel 63. Dadurch kann der Stößel 63 die erste Schlauchmanschette 88 von der Kolbenglocke 62 wegziehen, wodurch so viel Fluid aus dem zweiten Sperrraum 60 in den Ausgleichsbehälter 76 abfließt, dass die Kolbenglocke 62 dem Stößel 63 nachfolgen kann. Hierbei bleibt der Druck im zweiten Sperrraum 60 erhalten. Die zweite Schlauchmanschette 84 ist von der Kolbenglocke 62 abgehoben. Somit ist der erste Sperrraum 59 mit dem Nachlaufbehälter 76 verbunden und kann bei der Bewegung Fluid nachziehen.

### 6. Rückhub des Kolbens 56 in einem Bereich, in dem die Federkraft der Kompensationsfeder 58 größer als die Druckkraft im primären Druckraum 54 ist.

Die erste Schlauchmanschette 88 ist von der Kolbenglocke 62 abgehoben, wodurch das im zweiten Sperrraum 60 in den Ausgleichsbehälter 76 fließen kann. Die zweite Schlauchmanschette 84 wird vom Stößel 63 gegen die Kolbenglocke 62 gedrückt. Die Verbindung zwischen dem ersten Sperrraum 59 und dem Ausgleichsbehälter 76 ist somit unterbrochen, wodurch bei der Rückwärtsbewegung ein Unterdruck erzeugt wird. Die zweite Schlauchmanschette 84 ist ebenfalls als Rückschlagventil aufgeführt, d.h. ab einem bestimmten Unterdruck, der möglichst klein sein sollte, wird das schlauchförmige Ende von der zweiten Schlauchmanschette 84 von der dritten Radialbohrung 83 abgehoben, wodurch Fluid aus dem Ausgleichsbehälter 76 nachströmen kann.

### 7. Fluidausdehnung aufgrund von Erwärmung.

Nachfolgend wird der Fall der Fluidausdehnung aufgrund Erwärmung in verriegelter Stellung betrachtet. Steigt im ersten oder zweiten Sperrraum 59, 60 in selbsthemmender Stellung aufgrund von Fluidausdehnung der Druck an, so versucht er die Schlauchdichtung des unter Druck stehenden Sperrraums von der Kolbenglocke 62 abzuheben. Wie zuvor dargestellt, werden die Schlauchrichtungen selbstverstärkend zugedrückt. Ist diese selbstverstärkende Kraft größer als die Kraft, die zum Bewegen des Stößels 63 notwendig ist, diese Kraft besteht aus dem Schleppmoment des Motors und der Reibung zwischen Motor und Stößel 63 bzw. Spindel 70 und Stößel 63, so wird der Stößel 63 in Fluidausdehnungsrichtung mitgezogen. Ist die selbstverstärkende Kraft kleiner, so hebt die Schlauchdichtung des unter Druck stehenden Sperrraums von der Kolbenglocke 62 ab und lässt das überflüssige Fluid abströmen, es funktioniert also wie ein Überdruckventil.

Fig. 3 zeigt eine Prinzipskizze des Geberzylinders 4. Ein Kolben 56 liegt in einen primären Druckraum 54, der über einen Hydraulikanschluss 55 mittels einer hier nicht dargestellten Druckleitung 15 mit dem nicht dargestellten Nehmerzylinder 4 verbunden ist. Der Kolben 56 ist über Schnüffelnuten 89 mit einem Ausgleichsbehälter 76 verbunden.

Der Kolben 56 ist im Wesentlichen starr mit einer Kolbenglocke 62 verbunden. Mit der Kolbenglocke 62 spielbehaftet verbunden ist ein Stößel 63, der über eine Längsbohrung 71/72, eine Querbohrung 74 sowie eine Radialbohrung 80/81 verfügt. Über die Querbohrung 74 besteht eine Verbindung über einen Hohlraum 73 und eine Leitung 75 mit dem Ausgleichsbehälter 76. Die Verbindung des Stößels 63 mit der Kolbenglocke 62 ist spielbehaftet ausgelegt, in der Darstellung der Fig. 3 ist dies durch einen H-förmigen Querschnitt des Stößels 63 realisiert, wobei eine zweite Schlauchmanschette 84 sowie eine erste Schlauchmanschette 88, die hier als Dichtringe dargestellt sind, in den jeweiligen spielbehafteten Endstellungen des Stößels 63 gegenüber der Kolbenglocke 62 eine dichte Verbindung zwischen Kolbenglocke 62 und Stößel 63 herstellen können. Die Kolbenglocke 62 ist durch eine Kompensationsfeder 58 in eine Richtung vorgespannt.

Wird in der Darstellung der Fig. 3 der Stößel 63 von der dort dargestellten Endstellung in Richtung der Kraft der als Druckfeder ausgelegten Kompensationsfeder 58 bewegt, mithin die zweite Schlauchmanschette 84 auf die Kolbenglocke 62 aufgedrückt, so wird der erste Sperrraum 59 über eine Bohrung 91 sowie die Radialbohrung 80/81 und die Längsbohrung 71/72 sowie die Querbohrung 74 mit dem Hohlraum 73 und damit über die Leitung 75 mit dem Ausgleichsbehälter 76 verbunden. Es kann daher Flüssigkeit in dem ersten Sperrraum 59 verdrängt werden. Durch eine Bewegung der Kolbenglocke 62 in der Darstellung der Fig. 3 nach rechts, mithin also in der Richtung, in der ein Druck in dem primären Druckraum 54 aufgebaut wird, verringert sich das Volumen des ersten Sperrraumes 59. Wäre keine Verbindung zu dem Ausgleichsbehälter 76 vorhanden, so könnte keine Bewegung stattfinden. Über ein zweites Nachlaufventil 92 wird der zweite Sperrraum 60 mit Fluid aus dem Nachlaufbehälter 76 versorgt.

Wird der Stößel 63 in die Gegenrichtung gezogen, dies entspricht der Darstellung der Fig. 3, so wird der zweite Sperrraum 60 über die Radialbohrung 80/81 mit dem Nachlaufbehälter 76 verbunden, da nunmehr die zweite Schlauchmanschette 84 öffnet und die erste Schlauchmanschette 88 dichtend abschließt. Somit ist der erste Sperrraum 59 nicht mehr über den zuvor aufgezeigten Weg mit dem Nachlaufbehälter 76 verbunden. Wird die Kolbenglocke 62 nun in der Darstellung der Fig. 3 nach links bewegt, mit anderen Worten der primäre Druckraum 54 vergrößert, so kann über ein erstes Nachlaufventil 93 Fluid aus dem Nachlaufbehälter 76 in den ersten Sperrraum 59 gelangen.

Die beiden zuvor dargestellten Bewegungsabläufe entsprechen einer Bewegung, bei der der Selbsthemmungseffekt nicht ausgenutzt wird. Selbsthemmung tritt beispielsweise ein, wenn in der Darstellung der Fig. 3 der Stößel 63 nach rechts gedrückt wird, mit anderen Worten die zweite Schlauchdichtung 84 abdichtend gegen die Kolbenglocke 62 gedrückt wird, so dass die erste Schlauchdichtung 88 öffnet. In diesem Fall ist der zweite Sperrraum 60 gegenüber dem Ausgleichsbehälter 76 abgedichtet, das zweite Nachlaufventil 92 würde nur bei einem Unterdruck in dem zweiten Sperrraum 60 gegenüber dem Ausgleichsbehälter 76 in Aktion treten. Wird daher eine Kraft durch einen entsprechend hohen Druck in dem primären Druckraum 54 auch auf den Kolben 56 ausgeübt, so arbeitet dieser gegen die Druckkraft in dem zweiten Sperrraum 60 an. Da das Fluid nicht kompressibel ist, ist das gesamte System festgelegt. Das System ist also, ohne dass eine Kraft auf den Stößel 63 ausgeübt wird, nur durch Überwinden einer im Idealfall unendlich hohen Kraft zu bewegen und damit selbsthemmend.

In der in Fig. 3 dargestellten Stellung ist das System bei einer Verringerung des Druckes in dem primären Druckraum 54 auf einen Wert, bei dem die daraus resultierende auf den Kolben 56 ausgeübte Kraft geringer ist als die von der Kompensationsfeder 58 ausgeübte Kraft, ebenfalls festgelegt. In dieser Stellung ist der erste Sperrraum 59 gegenüber dem Ausgleichsbehälter 76 abgedichtet, das erste Nachlaufventil 93 würde nur bei einer in dem ersten Sperrraum 59 gegenüber dem Ausgleichsbehälter 76 geringeren Druck in Aktion treten. Auch in dieser Stellung ist das System also festgelegt und damit selbst gehemmt.

Die Selbsthemmung tritt in dem dargestellten Ausführungsbeispiel nicht durch eine mechanische Selbsthemmung des Stößels 63, z.B. durch ein entsprechendes Gewinde, mit dem dieses axial bewegt wird, auf, sondern durch eine hydraulische Selbsthemmung der gesamten Anordnung. Ein Antrieb des Stößels 63 muss daher als solches nicht selbsthemmend ausgelegt sein.

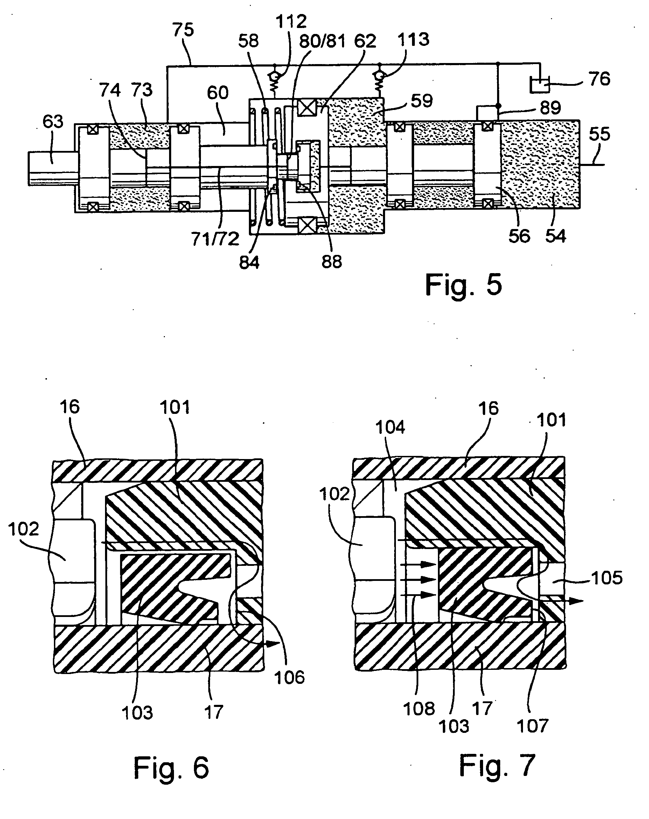

Fig. 6 zeigt einen Teilschnitt durch einen Geberzylinder 4. Dargestellt ist ein Schweißring 101 eines Gehäuses 16 sowie ein Kolben 17. Der Schweißring 101 wird in eine entsprechende Ausnehmung des Gehäuses teilweise eingesteckt. Eine Distanzhülse 102 stützt eine Sekundärdichtung 103 gegen eine nicht dargestellte Primärdichtung ab. Zwischen Schweißring 101 und Gehäuse 16 bzw. Distanzhülse 102 verbleibt ein Spalt, der zu einem Nachlaufraum 104 gehört. An der Sitzfläche 106 der Sekundärdichtung 103 in dem Schweißring 101 ist eine Nut 105 eingebracht. Ebenso können über den Umfang der Sitzfläche 106 verteilt mehrere Nuten 105 angeordnet sein.

Die Sekundärdichtung 103 ist in der Darstellung der Fig. 6 und 7 gegenüber der vorgesehenen Montagelage um 180° verdreht, die vordere Dichtkante 107 zeigt nicht in Richtung der hier nicht dargestellten Primärdichtung, sondern in Richtung des Schweißringes 101. Dies ist eine in der Praxis mögliche fehlerhafte Einbaulage der Sekundärdichtung 103. Wird nun eine Druckkraft auf die Sekundärdichtung 103 ausgeübt, dies kann beispielsweise im Rahmen einer Funktionsprüfung durch Druckbeaufschlagung unter anderem des Nachlaufraumes 104 geschehen, so kann eine recht hohe Druckkraft 108 auf die Sekundärdichtung 103 ausgeübt werden, wodurch diese in eine Position gemäß Fig. 7 verlagert wird. Wie in Fig. 7 dargestellt, liegt die Sekundärdichtung 103 sowohl in ihrem äußeren als auch inneren Bereich an der Sitzfläche 106 an, zusätzlich liegt die vordere Dichtkante dichtend an dem Kolben 17 an. Der Nachlaufraum 104 wird daher trotz fehlerhafter Einbaulage der Sekundärdichtung 103 gegenüber der Umgebung abgedichtet. Die Nut 105 ermöglicht nun ein Umströmen der Dichtung, wobei im Bereich der im Wesentlichen radial verlaufenden Sitzfläche 106 keine umlaufend dichte Fläche mehr besteht. Die Nut 105 liegt dabei vorteilhaft senkrecht zum Schwenkwinkel der Kolbenstange, um zu vermeiden, dass Nuten im Schweißring sich in dem Kolben einarbeiten bzw. einfräsen und hier zu Leckagen führen.

### Bezugszeichenliste

- 1: Hydraulisches System
- 2: Druckbegrenzungsventil
- 3: Kupplungsausrückvorrichtung
- 4: Geberzylinder
- 5: Nehmerzylinder
- 6: Ausrückmechanik
- 7: Kupplung
- 8: Brennkraftmaschine
- 9: Kurbelwelle
- 10: Getriebeeingangswelle
- 11: erster Leitungsstrang
- 12: zweiter Leitungsstrang
- 13: mechanische Übertragung
- 14: Betätigungsglied
- 15: Druckmediumsleitung
- 16: Gehäuse
- 17: Kolben
- 18: Druckraum
- 19: Primärdichtung
- 20: Nachlaufraum
- 21: Nachlaufleitung
- 22: Sekundärdichtung
- 23: Dichtungsträger
- 24: Rotationsachse
- 25: Grundkörper
- 26: Dichtlippe
- 27: Spalt
- 28: Axialring
- 29: Radialring
- 30: Dichtnase
- 31: Runddichtring
- 32: Abstandhalter
- 33: Leitungskupplung
- 34: Kupplungsbuchse
- 35: Erste Stufe
- 36: Zweite Stufe
- 37: Umlaufender Ring
- 38: Klemmfeder
- 39: Ringdichtung
- 40: Anlagefläche
- 41: Dichtungsraum
- 42: Überdruckventil
- 50: Gehäuse
- 51: Erstes Gehäuseteil
- 52: Zweites Gehäuseteil
- 53: Gehäusedichtung
- 54: Primärer Druckraum
- 55: Hydraulikanschluss
- 56: Kolben
- 57: Primärdichtung
- 58: Kompensationsfeder
- 59: Erster Sperrraum
- 60: Zweiter Sperrraum
- 61: Sekundärdichtung
- 62: Kolbenglocke
- 63: Stößel
- 64: Stift
- 65: Bohrung
- 66: Sicherungsring
- 67: Innengewinde
- 68: Verdrehsicherung
- 69: Außengewinde
- 70: Spindel
- 71: Erste Längsbohrung
- 72: Zweite Längsbohrung
- 73: Hohlraum
- 74: Querbohrung
- 75: Leitung
- 76: Ausgleichsbehälter
- 77: Membran
- 78: Deckel
- 79: Bohrung
- 80: Erste Radialbohrung
- 81: Zweite Radialbohrung
- 83: Dritte Radialbohrung
- 84: Zweite Schlauchmanschette
- 85: Nut
- 86: Steg
- 87: Stirnfläche
- 88: Erste Schlauchmanschette
- 89: Axialbohrung
- 90: Bohrung
- 91: Bohrung
- 92: Zweites Nachlaufventil
- 93: Erstes Nachlaufventil
- 101: Schweißring
- 102: Distanzhülse
- 103: Sekundärdichtung
- 104: Nachlaufraum
- 105: Nut
- 106: Sitzfläche
- 107: Vordere Dichtkante
- 108: Druckkraft
- 110: Erstes Ventil
- 111: Zweites Ventil
- 112: Erstes Unterdruckventil
- 113: Zweites Unterdruckventil
- 114: Zwei-Wege-Ventil
- 115: Dichtung
- 116: Schnüffelnut
- 117: Antriebsmittel
- 118: Erster axialer Vorsprung
- 119: zweiter axialer Vorsprung

## Patentansprüche

1. Hydraulisches System (1), insbesondere für Kraftfahrzeuge, umfassend einen Geberzylinder (4) mit einem Gehäuse (16), einem in diesem axial verschiebbar angeordneten Kolben (17), der einen mit einer Hydraulikflüssigkeit gefüllten Druckraum (18) begrenzt und bei Betätigung des Geberzylinders (4) mittels einer auf den Kolben (17) wirkenden Kolbenstange (13) axial verschoben wird und dadurch die Hydraulikflüssigkeit mit Druck beaufschlagt und zumindest einem zwischen Gehäuse (16) und .Kolben (17) angeordneten Dichtmittel (26), weiter umfassend einen Nehmerzylinder (5) und eine diese verbindende Druckmediumsleitung (15), wobei in dem hydraulischen System ein Überdruckventil (42) angeordnet ist, das den Druck in dem hydraulischen System (1) auf einen Maximaldruck begrenzt, **dadurch gekennzeichnet, dass** das Überdruckventil (42) eine Primärdichtung (26) umfasst, deren Dichtwirkung durch weitere Mittel (23, 28, 30, 31) oberhalb des Maximaldruckes verringert ist.

2. Hydraulisches System nach dem vorhergehenden Anspruch, **dadurch gekennzeichnet, dass** der Maximaldruck temperaturabhängig ist.

3. Hydraulisches System nach einem der vorhergehenden Ansprüche, **dadurch gekennzeichnet, dass** das Überdruckventil (42) in den Geberzylinder (4) integriert ist.

4. Hydraulisches System nach einem der vorhergehenden Ansprüche, **dadurch gekennzeichnet, dass** die weiteren Mittel eine weitere Dichtung (31) umfassen.

5. Hydraulisches Systeme nach den vorhergehenden Anspruch, **dadurch gekennzeichnet, dass** die weitere Dichtung nur bis zu einem Maximaldruck dicht ist.

6. Hydraulisches System nach einem der Ansprüche 4 oder 5, **dadurch gekennzeichnet, dass** die weitere Dichtung ein Runddichtring (31) ist.

7. Hydraulisches System nach einem der vorhergehenden Ansprüche, **dadurch gekennzeichnet, dass** die weiteren Mittel einen Dichtungsträger (23) umfassen.

8. Hydraulisches System nach den vorhergehenden Anspruch, **dadurch gekennzeichnet, dass** der Dichtungsträger (23) zumindest teilweise zwischen Primärdichtung (26) und Gehäuse (16) angeordnet ist.

9. Hydraulisches System nach einem der Ansprüche 4-6, **dadurch gekennzeichnet, dass** die weitere Dichtung (31) zwischen Gehäuse (16) und Dichtungsträger (23) angeordnet ist.

10. Hydraulisches System nach einem der Ansprüche 7-9, **dadurch gekennzeichnet, dass** der Dichtungsträger (23) eine Dichtnase (30) umfasst und dass die weitere Dichtung (31) zwischen Gehäuse (16) und Dichtnase (30) angeordnet ist.

11. Hydraulisches System nach einem der Ansprüche 7-10, **dadurch gekennzeichnet, dass** der Dichtungsträger (23) aus einem Kunststoff gefertigt ist, dessen Elastizitätsmodul stärker temperaturabhängig ist als der Elastizitätsmodul des Gehäuses (16).

12. Hydraulisches System nach Anspruch 1, **dadurch gekennzeichnet, dass** das Überdruckventil (42) in eine Anordnung umfassend eine Leitungskupplung (33) und eine Kupplungsbuchse (34) integriert ist.

13. Hydraulisches System nach dem vorhergehenden Anspruch, **dadurch gekennzeichnet, dass** das Überdruckventil (42) durch eine Dichtung gebildet wird, deren Geometrie und Werkstoffkenngrößen so ausgelegt sind, dass diese nur bis zu einem Maximaldruck dicht ist.

14. Hydraulisches System nach dem vorhergehenden Anspruch, **dadurch gekennzeichnet, dass** die Dichtung eine Ringdichtung (39) umfasst.

## Claims

1. A hydraulic system (1), in particular for motor vehicles, comprising a master cylinder (4) with a housing (16), an axially movable piston (17) situated therein which limits a pressure chamber (18) filled with a hydraulic fluid and which is moved axially when the master cylinder (4) is actuated by means of a piston rod (13) acting on the piston (17), thereby applying pressure to the hydraulic fluid, and at least one sealer (26) situated between housing (16) and piston (17), further comprising a slave cylinder (5) and a pressure medium line (15) connecting them, whereby a pressure relief valve (42) is situated in the hydraulic system which limits the pressure in the hydraulic system (1) to a maximum pressure, **characterized in that** the pressure relief valve (42) includes a primary seal (26) whose sealing effect is reduced by additional means (23, 28, 30, 31) above the maximum pressure.

2. Hydraulic system according to the preceding claim, **characterized in that** the maximum pressure is temperature-dependent.

3. Hydraulic system according to one of the preceding claims, **characterized in that** the pressure relief valve (42) is integrated into the master cylinder (4).

4. Hydraulic system according to one of the preceding claims, **characterized in that** the additional means include an additional seal (31).

5. Hydraulic system according to the preceding claim, **characterized in that** the additional seal is tight only up to a maximum pressure.

6. Hydraulic system according to one of Claims 4 or 5, **characterized in that** the additional seal is an O-ring (31).

7. Hydraulic system according to one of the preceding claims, **characterized in that** the additional means include a seal holder (23).

8. Hydraulic system according to the preceding claim, **characterized in that** the seal holder (23) is at least partially situated between primary seal (26) and housing (16).

9. Hydraulic system according to one of Claims 4-6, **characterized in that** additional seal (31) is situated between housing (16) and seal holder (23).

10. Hydraulic system according to one of Claims 7-9, **characterized in that** seal holder (23) comprises a sealing lug (30), and that additional seal (31) is situated between housing (16) and sealing lug (30).

11. Hydraulic system according to one of Claims 7-10, **characterized in that** seal holder (23) is made of a plastic material whose modulus of elasticity is more temperature-dependent than the modulus of elasticity of housing (16).

12. Hydraulic system according to Claim 1, **characterized in that** pressure relief valve (42) is integrated into an arrangement comprising a pipe coupling (33) and a coupling sleeve (34).

13. Hydraulic system according to the preceding claim, **characterized in that** pressure-relief valve (42) is formed by a seal whose geometry and material characteristics are designed so that it is tight only up to a maximum pressure.

14. Hydraulic system according to the preceding claim, **characterized in that** the seal comprises a ring seal (39).

## Revendications

1. Système hydraulique (1), en particulier pour des véhicules automobiles, comprenant un cylindre émetteur (4) se composant d'un carter (16), d'un piston (17) disposé en étant mobile axialement dans celui-ci, piston qui limite une chambre de pression (18) remplie d'un liquide hydraulique et, lors de l'actionnement du cylindre émetteur (4), est déplacé axialement au moyen d'une tige de piston (13) agissant sur le piston (17), et par le fait que le liquide hydraulique est alimenté en pression, et se composant d'au moins un moyen d'étanchéité (26) disposé entre le carter (16) et le piston (17), comprenant en outre un cylindre récepteur (5) et une conduite d'un milieu sous pression (15) reliant ces cylindres, où une soupape de surpression (42) est disposée dans le système hydraulique, soupape de surpression qui limite la pression, dans le système hydraulique (1), à une pression maximale,
**caractérisé en ce que** la soupape de surpression (42) comprend un joint primaire (26) dont l'effet d'étanchéité, au-delà de la pression maximale, est diminué par d'autres moyens (23, 28, 30, 31).

2. Système hydraulique selon la revendication précédente, **caractérisé en ce que** la pression maximale est dépendante de la température.

3. Système hydraulique selon l'une ou l'autre des revendications précédentes, **caractérisé en ce que** la soupape de surpression (42) est intégrée au cylindre émetteur (4).

4. Système hydraulique selon l'une quelconque des revendications précédentes, **caractérisé en ce que** les autres moyens comprennent un autre joint d'étanchéité (31).

5. Système hydraulique selon la revendication précédente, **caractérisé en ce que** l'autre joint d'étanchéité est étanche seulement jusqu'à une pression maximale.

6. Système hydraulique selon la revendication 4 ou 5, **caractérisé en ce que** l'autre joint d'étanchéité est une bague d'étanchéité circulaire (31).

7. Système hydraulique selon l'une quelconque des revendications précédentes, **caractérisé en ce que** les autres moyens comprennent un support d'étanchéité (23).

8. Système hydraulique selon la revendication précédente, **caractérisé en ce que** le support d'étanchéité (23) est disposé au moins partiellement entre le joint d'étanchéité primaire (26) et le carter (16).

9. Système hydraulique selon l'une quelconque des revendications 4 à 6, **caractérisé en ce que** l'autre joint d'étanchéité (31) est disposé entre le carter (16) et le support d'étanchéité (23).

10. Système hydraulique selon l'une quelconque des revendications 7 à 9, **caractérisé en ce que** le support d'étanchéité (23) comprend un bec d'étanchéité (30), et **en ce que** l'autre joint d'étanchéité (31) est disposé entre le carter (16) et le bec d'étanchéité (30).

11. Système hydraulique selon l'une quelconque des revendications 7 à 10, **caractérisé en ce que** le support d'étanchéité (23) est fabriqué dans une matière plastique dont le module d'élasticité est plus fortement dépendant de la température que le module d'élasticité du carter (16).

12. Système hydraulique selon la revendication 1, **caractérisé en ce que** la soupape de surpression (42) est intégrée à un ensemble comprenant un accouplement de conduites (33) et une douille d'accouplement (34).

13. Système hydraulique selon la revendication précédente, **caractérisé en ce que** la soupape de surpression (42) est formée par un joint d'étanchéité dont la géométrie et les grandeurs caractéristiques de matière sont conçues de manière telle, que ce joint d'étanchéité soit étanche seulement jusqu'à une pression maximale.

14. Système hydraulique selon la revendication précédente, **caractérisé en ce que** le joint d'étanchéité comprend un joint d'étanchéité annulaire (39).
